# EUROPEAN PATENT APPLICATION

(11) **EP 4 331 906 A1**
(43) Date of publication of application: **06.03.2024**
(21) Application number: 23183681.8
(22) Date of filing: 05.07.2023
(51) Int. Cl.: B60L 53/66, B60L 8/00

(54) **ENERGY UTILIZATION INFORMATION SYSTEM, ENERGY UTILIZATION INFORMATION PROCESSING METHOD AND PROGRAM**

(30) Priority: 30.08.2022 JP 2022136753
(71) Applicant: TOYOTA JIDOSHA KABUSHIKI KAISHA, Aichi-ken 471-8571 (JP)
(72) Inventor: MASUDA, Taizo, Toyota-shi, 471-8571 (JP); SEKI, Yasunobu, Toyota-shi, 471-8571 (JP); AWANO, Hiroki, Toyota-shi, 471-8571 (JP); NAKAMURA, Tomoko, Toyota-shi, 471-8571 (JP); KANEKO, Tsuyoshi, Toyota-shi, 471-8571 (JP); YONEKAWA, Kosuke, Toyota-shi, 471-8571 (JP)
(74) Representative: J A Kemp LLP

(57) **Abstract**

Primary information relating to generation or use of electrical energy generated by the solar power generation apparatus (23) mounted in the vehicle (5) and secondary information relating to the vehicle (5) mounting the solar power generation apparatus (23) are acquired, and natural energy utilization information tying the acquired secondary information with the acquired primary information is prepared.

## Description

### FIELD

The present invention relates to an energy utilization information system, an energy utilization information processing method and a program.

### BACKGROUND

Known in the art is a vehicle provided with a solar power generation panel and designed to use electric power generated by the solar power generation panel as power for driving the vehicle etc. (for example, see Japanese Unexamined Patent Publication No. 2021-197847).

### SUMMARY

In this regard, as a measure for preventing the currently hot topic global warming, promoting the active use of generation of power using natural energy such as generation of power by a solar power generation panel has become urgent. For this reason, it is necessary to raise the awareness of people regarding generation of power using natural energy.

Therefore, according to the present invention, there is provided an energy utilization information system comprising an electric control unit which is configured to:
acquire primary information relating to generation or use of electrical energy generated by a solar power generation apparatus mounted in a vehicle and secondary information relating to the vehicle mounting the solar power generation apparatus, and
prepare natural energy utilization information tying the secondary information with the primary information.

Furthermore, according to the present invention, there is provided an energy utilization information processing method comprising the steps of:
acquiring primary information relating to generation or use of electrical energy generated by a solar power generation apparatus mounted in a vehicle and secondary information relating to the vehicle mounting the solar power generation apparatus, and
preparing natural energy utilization information tying the secondary information with the primary information.

Furthermore, according to the present invention, there is provided a program that causes a computer to :
acquire primary information relating to generation or use of electrical energy generated by a solar power generation apparatus mounted in a vehicle and secondary information relating to the vehicle mounting the solar power generation apparatus, and
prepare natural energy utilization information tying the secondary information with the primary information.

By preparing natural energy utilization information tying the secondary information with primary information, it is possible to raise the awareness of people with respect to power generation using natural energy.

### BRIEF DESCRIPTION OF DRAWINGS

FIG. 1 is an overall view of an energy utilization information system.
FIG. 2 is a view illustrating a management server.
FIG. 3 is a view illustrating a vehicle.
FIG. 4 is a view showing communication equipment installed in a company etc.
FIG. 5 is a view showing a list of natural energy utilization information.
FIG. 6 is a view for explaining a procedure of advance registration.
FIG. 7 is a view for explaining a procedure of start processing of a vehicle.
FIG. 8 is a flow chart for transmission of basic information.
FIG. 9 is a flow chart for transmission of position information of a vehicle.
FIG. 10 is a flow chart for calculation of primary information.
FIG. 11 is a flow chart for calculation of secondary information.
FIG. 12 is a flow chart for preparation of natural energy utilization information.
FIG. 13 is a view showing a list of natural energy utilization information.
FIG. 14 is a view showing a list of natural energy utilization information.
FIG. 15 is a view showing a list of natural energy utilization information.
FIG. 16 is a view showing a list of desired acquired natural energy utilization information.
FIG. 17 is a flow chart for performing matching processing.
FIG. 18A and FIG. 18B are respectively views for explaining a running route.
FIG. 19 is a view showing a list of desired acquired natural energy utilization information.
FIG. 20 is a view for explaining a procedure of matching processing.
FIG. 21 is a view for explaining a procedure of matching processing.
FIG. 22A and FIG. 22B are respectively views for explaining a procedure of registration of a scheduled running route and a procedure of matching processing.

### DESCRIPTION OF EMBODIMENTS

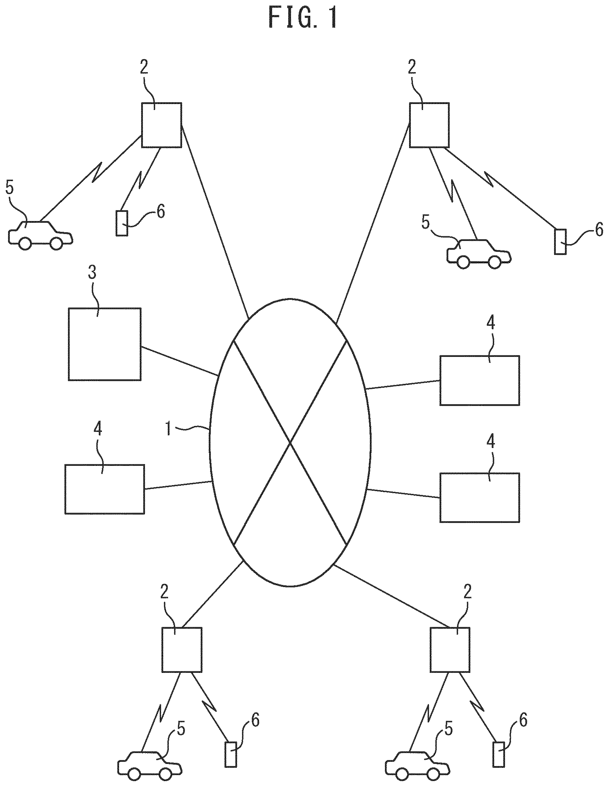

FIG. 1 shows an overall view of an energy utilization information system. Referring to FIG. 1, 1 indicates a communication network, 2 base stations of the communication network 1, 3 a management server, 4 companies, research institutes, or individuals desiring to acquire natural energy utilization information (below, referred to as a "parties desiring acquisition"), 5 vehicles, and 6 mobile terminals of owners of the vehicles.

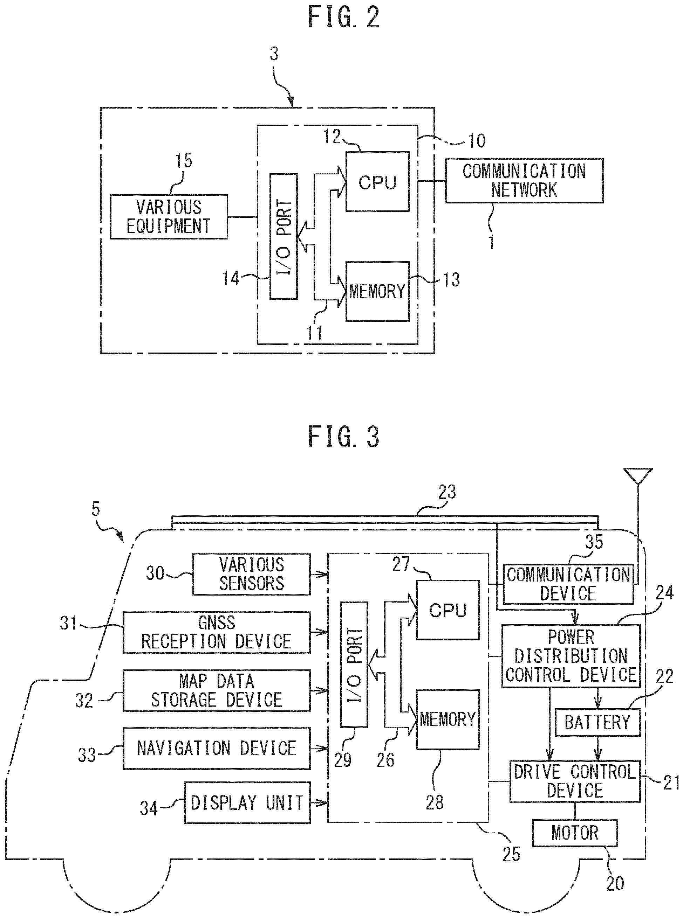

FIG. 2 shows the management server 3 shown in FIG. 1. Referring to FIG. 2, inside the management server 3, an electronic control unit 10 is provided. This electronic control unit 10 is comprised of a digital computer provided with a CPU (microprocessor) 12, a memory 13 comprised of a ROM and RAM, and an input/output port 14 which are connected with each other by a bidirectional bus 11. Further, as shown in FIG. 2, the various equipment 15 are connected to the electronic control unit 10, and the electronic control unit 10 is connected to the communication network 1.

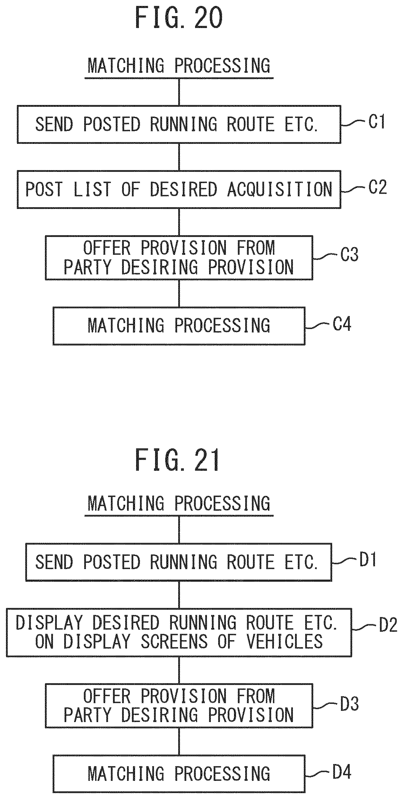

FIG. 3 schematically shows one example of the vehicle 5 shown in FIG. 1. Referring to FIG. 3, 20 indicates an electric motor for driving the vehicle 5, 21 a drive control device for controlling the drive of the electric motor 20, 22 a battery, 23 a solar power generation apparatus installed on the roof of the vehicle 5, for example, a solar power generation panel, 24 a power distribution control device for control of the distribution of the electric power generated at the solar power generation apparatus 23 between use for charging the battery 22 and for driving the electric motor 20, and 25 an electronic control unit. As shown in FIG. 3, the electronic control unit 25 is comprised of a digital computer provided with a CPU (microprocessor) 27, a memory 28 comprised of a ROM and RAM, and an input/output port 29 which are connected with each other by a bidirectional bus 26. Further, as shown in FIG. 3, the drive control device 21 and power distribution control device 24 are connected to the electronic control unit 25, and these drive control device 21 and power distribution control device 24 are controlled based on the output signal of the electronic control unit 25.

On the other hand, as shown in FIG. 3, the vehicle 5 is provided with a vehicle-mounted camera for detecting the surroundings of the vehicle 5, various sensors 30 comprised of lidar (LIDAR), radar, etc., a GNSS (global navigation satellite system) reception device 31, map data storage device 32, navigation device 33, and display unit 34 provided with a display screen. The GNSS reception device 31 can detect the current position of the vehicle 5 (for example, the longitude and latitude of the vehicle 5) based on information obtained from a plurality of satellites. Therefore, this GNSS reception device 31 can be used to identify the current position of the vehicle 5. As this GNSS reception device 31, for example, a GPS reception device is used.

These various sensors 30, GNSS reception device 31, map data storage device 32, navigation device 33, and display unit 34 are connected to the electronic control unit 27. Further, the vehicle 5 mounts a communication device 35 for communicating with the management server 3. The vehicle 5 and the mobile terminal 6 can communicate with the management server 3 through the base station 2 and the communication network 1. In the example shown in FIG. 3, the electric motor 20 is driven by the charging power of the battery 22, is driven by drive use power of the vehicle 5 distributed by the power distribution control device 24, or is driven by both of the charging power of the battery 22 and the drive use power of the vehicle 5 distributed by the power distribution control device 24.

On the other hand, in the example shown in FIG. 3, the generated voltage and generated current etc. of the solar power generation apparatus 23 are detected. In the electronic control unit 27, the generated power of the solar power generation apparatus 23 is calculated based on these detection values. In this case, in the embodiment according to the present invention, this generated power of the solar power generation apparatus 23 is called the "amount of generation of power by the solar power generation apparatus 23". Further, in the example shown in FIG. 3, the terminal voltage, temperature, etc. of the battery 22 are detected. In the electronic control unit 27, the amount of charge supplied to the battery 22 is calculated based on these detection values. In this case, in the embodiment according to the present invention, this amount of charge supplied to the battery 22 is called the "amount of charging of the battery 22". Further, in the example shown in FIG. 3, the drive voltage, drive current, etc. of the electric motor 20 are detected. In the electronic control unit 27, the drive power of the electric motor 20 is calculated based on these detection values. In this case, in the embodiment according to the present invention, this drive power of the electric motor 20 is called the "amount of consumption of electrical energy used for driving the vehicle 5".

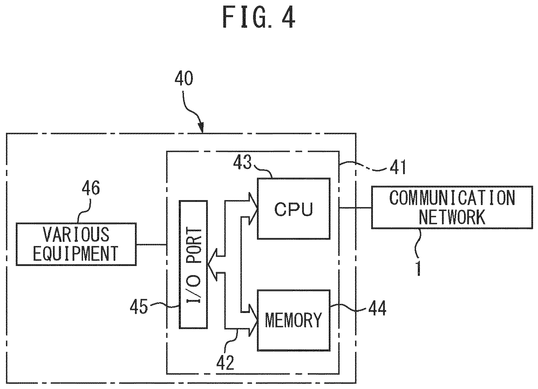

On the other hand, inside the companies desiring acquisition 4 shown in FIG. 1, communication equipment is installed. This communication equipment is shown by reference numeral 40 in FIG. 4. Referring to FIG. 4, inside this communication equipment 40, an electronic control unit 41 is provided. This electronic control unit 41 is comprised of a digital computer provided with a CPU (microprocessor) 43, a memory 44 comprised of a ROM and RAM, and an input/output port 45 which are connected with each other by a bidirectional bus 42. Further, as shown in FIG. 4, various equipment 46 are connected to the electronic control unit 41. Further, the electronic control unit 41 is connected to the communication network 1. Therefore, this communication equipment 40 can also communicate with the management server 3 through the communication network 1.

Now then, as a measure for preventing the currently hot topic global warming, promoting the active use of generation of power using natural energy such as generation of power by the solar power generation apparatus 23 has become urgent. For this reason, it is necessary to raise the awareness of people regarding generation of power using natural energy. In this case, if not only using information relating to amounts of generation of power by solar power generation apparatuses 23 mounted in vehicles 5 etc., but adding to this information the information on when, by whom, and where power was generated by the solar power generation apparatuses 23, it is believed that interest in people in generation of power by the solar power generation apparatuses 23 would rise. For example, if the power by the solar power generation apparatus 23a is generated by a famous person whom people were interested in, it is believed that interest of the people interested in that famous person in generation of power by solar power generation apparatuses 23 would rise. Further, for example, if power were generated by the solar power generation apparatuses 23 in regions in which people were interested, it is believed that interest of the people interested in those regions in generation of power by solar power generation apparatuses 23 would rise.

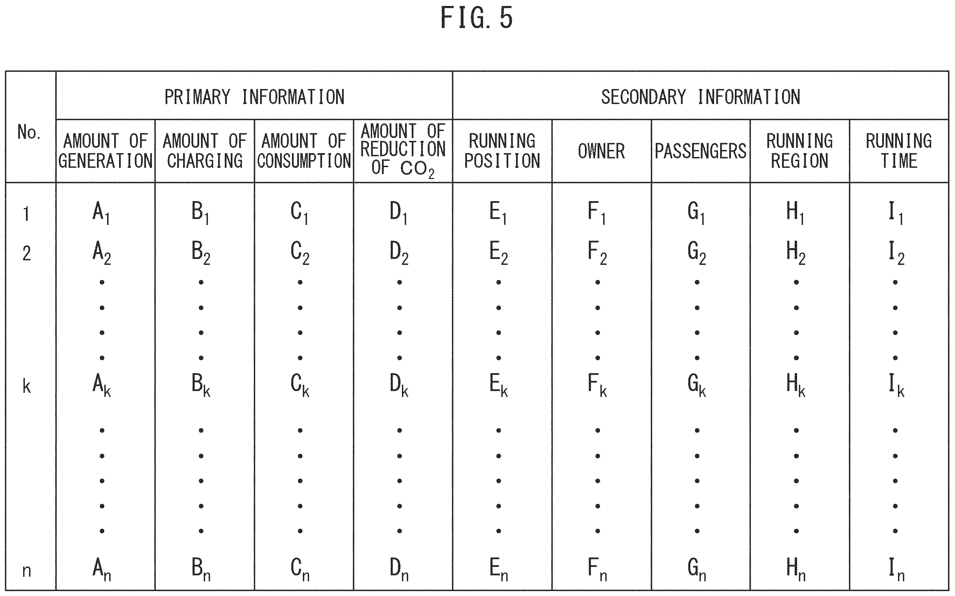

That is, if preparing natural energy utilization information combining primary information relating to generation or use of electrical energy generated by the solar power generation apparatuses 23 mounted in the vehicles 5 and secondary information of when, by whom, and where power was generated by the solar power generation apparatuses 23, that is, secondary information relating to the vehicles 5 mounting the solar power generation apparatuses 23, that is, if preparing natural energy utilization information tying the above secondary information with the above primary information, it is believed that interest of people in generation of power by the solar power generation apparatuses 23 etc. would rise. Therefore, in the embodiment according to the present invention, natural energy utilization information tying the above secondary information with the above primary information is prepared. FIG. 5 shows an example of a list of prepared natural energy utilization information.

Referring to FIG. 5, the list of natural energy utilization information shown in FIG. 5 lists primary information and secondary information for each of No. 1 to No. "n" vehicles 5. In the example shown in FIG. 5, as each primary information, the amount of generation by the solar power generation apparatus 23, the amount of charging of the battery 22, and the amount of consumption of electrical energy used for driving the vehicle 5 are listed. Further, in the example shown in FIG. 5, in addition to these amount of generation, amount of charging, and amount of consumption, the amount of reduction of CO₂ emission is also listed. In this case, in the embodiment according to the present invention, the amount of CO₂ emission reduced if driving the vehicle 5 using the electric motor 20 instead of an internal combustion energy is defined as the amount of reduction of CO₂ emission. This amount of reduction of CO₂ emission is calculated from the amount of consumption of electrical energy used for driving the vehicle 5 etc. Note that, in this case, the owner of the vehicle 5 is given a right enabling it to emit the amount of CO₂ corresponding to this amount of reduction of CO₂ emission as tradable carbon credits. That is, in the example shown in FIG. 5, information relating to the amount of reduction of CO₂ emission for trading by carbon credits is also listed.

On the other hand, the list of natural energy utilization information shown in FIG. 5 lists as each secondary information the running position of the vehicle 5, the name of the owner of the vehicle 5, the names of passengers of the vehicle 5, the running region of the vehicle 5, and the running time of the vehicle 5. In the example shown in FIG. 5, the "running position of the vehicle 5" designates the name of the place at which the vehicle 5 is currently running. The "running region of the vehicle 5" designates the geographical region in which the vehicle 5 is running, for example, Tokyo city, Shizuoka prefecture, Aichi prefecture, Mishima city, or Nagoya city. The "running time of the vehicle 5", for example, designates the time period during which the vehicle 5 runs in each running region.

Further, the values shown in the list of FIG. 5 show the values at every certain time period, for example, every 10 minutes, every hour, or at a certain time at every day. Further, if the values shown in the list of FIG. 5 show the values at a certain time at every day, the values sometimes show the total values for the past day up until this certain time and the values sometimes show the total values of all of the past values up to this certain time. In this case, if the values shown in the list of FIG. 5 show the total values for the past day up until a certain time, in FIG. 5, the amounts of generation, amounts of charging, amounts of consumption, and amounts of reduction of CO₂ emission show the total values for the past day up until this certain time. On the other hand, in this case, in FIG. 5, the "running position" designates the position of the vehicle 5 at this certain time, the "running region" designates one or more regions at which the vehicle 5 ran in the past day at this certain time, and the "running time" designates the running time at each running region at which the vehicle 5 ran in the past day at this certain time.

As explained above, if preparing natural energy utilization information tying the secondary information shown in FIG. 5 with the primary information shown in FIG. 5, it is believed that the interest of people in generation of power by the solar power generation apparatuses 23 would rise. In this case, in one embodiment according to the present invention, each primary information includes at least one of the amount of generation by the solar power generation apparatus 23, the amount of charging of the battery 22, and the amount of consumption of the electrical energy used for driving the vehicle 5, while each secondary information includes at least one of the running position of the vehicle 5, the name of the owner of the vehicle 5, the names of the passengers of the vehicle 5, the running region of the vehicle 5, and the running time of the vehicle 5.

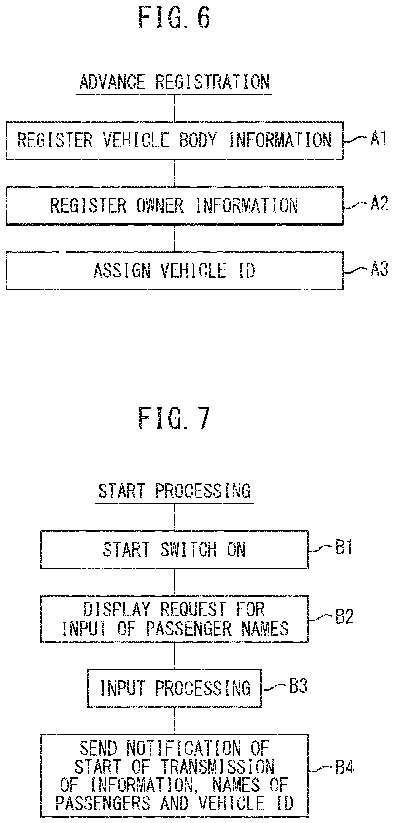

The list of the natural energy utilization information shown in FIG. 5 can be prepared at each vehicle 5 and can be prepared at the management server 3. Next, using as an example the case of preparing this list of natural energy utilization information at the management server 3, one example of the method of preparation of this list of natural energy utilization information will be explained while referring to FIG. 6 to FIG. 12.

FIG. 6 shows the procedure of advance registration performed at the management server 3 in the case of preparing the list of natural energy utilization information at the management server 3. Referring to FIG. 6, as shown at A1 of FIG. 6, first, on the display screen of the display unit 34 of the vehicle 5, one accesses a list preparation site of natural energy utilization information in the management server 3 and registers the model number etc. of the vehicle and other information relating to the vehicle body at the list preparation site in the management server 3. Next, as shown at A2 of FIG. 6, one registers information relating to the name of the owner of the vehicle 5 etc. on the display screen of the display part 34 of the vehicle 5 . These registered information are stored in the memory 13 of the electronic control unit 10 of the management server 3. If finishing registering information relating to the name of the owner of the vehicle 5 etc., at the management server 3, the vehicle 5 is assigned a vehicle ID and the assigned vehicle ID is sent to the vehicle 5 and stored in the memory 28 of the electronic control unit 25 of the vehicle 5.

FIG. 7 shows the procedure of start processing at the vehicle 5 when starting use of the vehicle 5. If referring to FIG. 7, as shown at B 1 of FIG. 7, first, the start switch is turned on. If the start switch is turned on, as shown at B2 of FIG. 7, the display screen of the display part 34 of the vehicle 5 displays a request for input of the names of passengers of the vehicle 5. Next, as shown by B3 of FIG. 7, work for inputting the names of passengers is performed. If the work for inputting the names of passengers is performed, the names of passengers are stored in the memory 13 of the electronic control unit 10 of the management server 3. Next, as shown by B4 of FIG. 7, the notification of the start of transmission of the natural energy utilization information, the input names of passengers, and the vehicle ID are sent from the vehicle 5 to the management server 3.

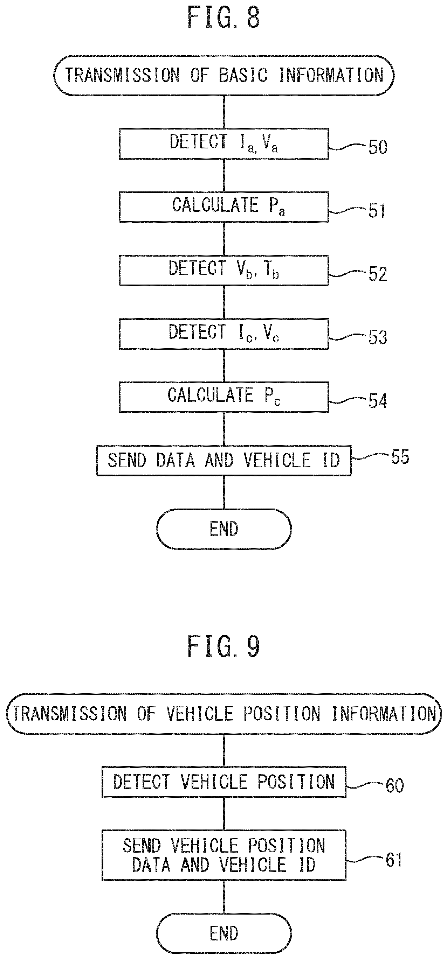

FIG. 8 shows the routine for transmission of basic information for sending basic information for calculation of the primary information from the vehicle 5 to the management server 3. This routine is executed in the electronic control unit 25 of the vehicle 5 by interruption every certain time period, for example, every second. Referring to FIG. 8, first, at step 50, the generated current Ia and generated voltage Va of the solar power generation apparatus 23 are detected. Next, at step 51, the generated power Pa (kW) of the solar power generation apparatus 23 is calculated from the detected generated current Ia and generated voltage Va. Next, at step 52, the terminal voltage Vb and temperature Tb of the battery 22 are detected. Next, at step 53, the drive current Ic and drive voltage Vc of the electric motor 20 are detected. Next, at step 54, the drive power Pc of the electric motor 20 is calculated from the detected drive current Ic and drive voltage Vc. Next, at step 55, the data, that is, the calculated generated power Pa of the solar power generation apparatus 23, the detected terminal voltage Vb and temperature Tb of the battery 22, and the calculated drive power Pc of the electric motor 20, are sent together with the vehicle ID to the management server 3. These transmitted data are stored in the memory 13 of the electronic control unit 10 of the management server 3.

FIG. 9 shows a routine for transmission of vehicle position information which sends position information of the vehicle 5 as secondary information from the vehicle 5 to the management server 3. This routine is executed in the electronic control unit 25 of the vehicle 5 by interruption every certain time period, for example, every second. Referring to FIG. 9, first, at step 60, the current position of the vehicle 5 (for example, the longitude and latitude of the vehicle 5) is detected by the GNSS reception device 31. Next, at step 61, data showing the current position of the vehicle 5 and the vehicle ID are sent to the management server 3. These transmitted data are stored in the memory 13 of the electronic control unit 10 of the management server 3.

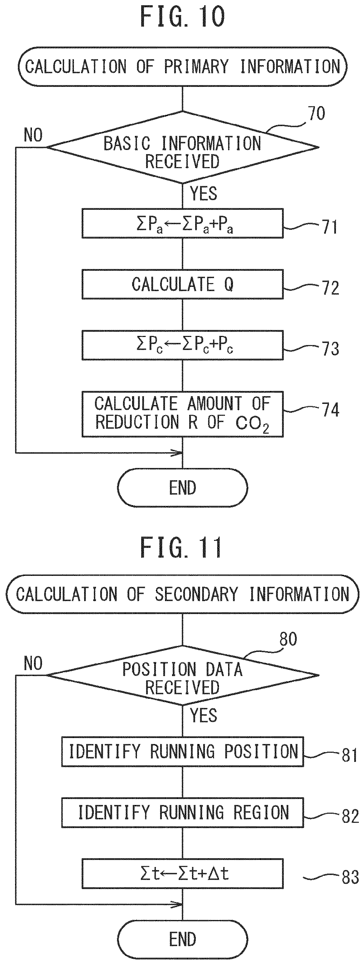

FIG. 10 shows a routine for calculation of primary information. This routine is repeatedly executed in the electronic control unit 10 of the management server 3. Referring to FIG. 10, first, at step 70, it is judged if the basic information sent from the vehicle 5 has been received. When it is judged that basic information has been received, the routine proceeds to step 71 where the work of adding up the generated power Pa of the solar power generation apparatus 23 is performed. The sum value of the generated power Pa is defined as ΣPa. Further, based on the sum value ΣPa of this generated power Pa, the amount of generation (kWh) of the solar power generation apparatus 23 in a certain time from the start of the summation (for example, 1 hour or 1 day) is calculated. Next, at step 72, the current amount of charging Q of the battery 22 is calculated based on the terminal voltage Vb and temperature Tb of the battery 22.

Next, at step 73, the work of adding up the drive power Pc of the electric motor 20 is performed. The sum value of the drive power Pc of the electric motor 20 is defined as ΣPc. Further, based on the sum value ΣPc of this drive power Pc of the electric motor 20, the amount of consumption (kwh) of electrical energy in a certain time from the start of the summation (for example, 1 hour or 1 day) is calculated. On the other hand, as explained above, in the embodiment according to the present invention, the amount of CO₂ emission reduced if driving the vehicle 5 using the electric motor 20 instead of an internal combustion energy is defined as the amount of reduction of CO₂ emission, and this amount of reduction of CO₂ emission is calculated from the amount of consumption of electrical energy used for driving the vehicle 5 Therefore, at step 74, the amount of reduction of CO₂ emission R in a certain time from the start of summation (for example, 1 hour or 1 day) is calculated based on the sum value ΣPc of the drive power Pc of the electric motor 20 calculated at step 73.

FIG. 11 shows a routine for calculation of secondary information. This routine is repeatedly executed in the electronic control unit 10 of the management server 3. Referring to FIG. 11, first, at step 80, it is judged if data showing the current position of the vehicle 5 sent from the vehicle 5 has been received. When it is judged that the current position of the vehicle 5 has been received, the routine proceeds to step 81 where the running position of the vehicle 5, that is, the name of the location where the vehicle 5 is currently running, is identified based on the map information stored in the memory 13 of the electronic control unit 10 of the management server 3. Next, at step 82, the geographical region in which the vehicle 5 is currently running is identified. Next, at step 83, the work of adding up the transmission intervals Δt of the position data of the vehicle 5 from the vehicle 5 to the management server 3 is performed and the sum value of the transmission intervals Δt is defined as Σt. This sum value Σt of the transmission intervals Δt expresses the elapsed time from when transmission of position data of the vehicle 5 is started, that is, the running time of the vehicle 5.

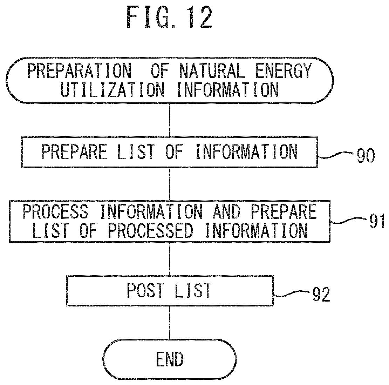

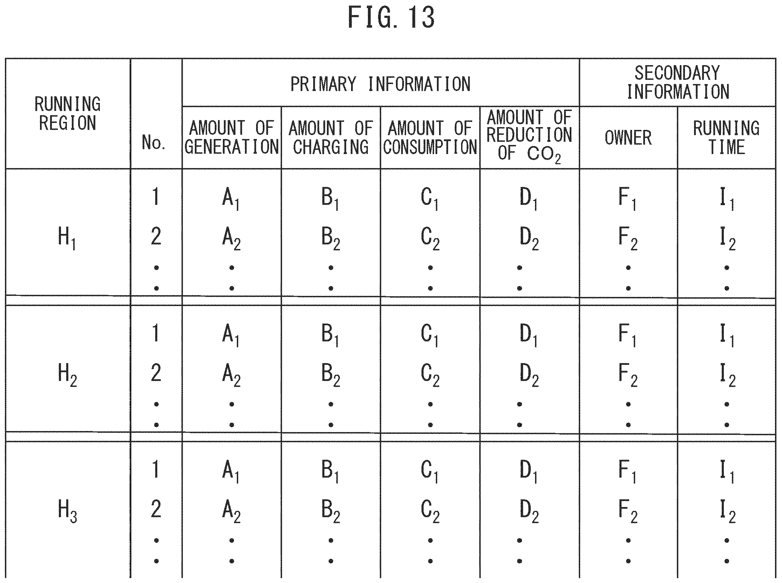

FIG. 12 shows a routine for preparation of a list of natural energy utilization information. This routine is repeatedly executed in the electronic control unit 10 of the management server 3 every certain time, for example, every 10 minutes, every 1 hour, or every 24 hours. Referring to FIG. 12, first, at step 90, the list of natural energy utilization information shown in FIG. 5 is prepared based on the information stored in the memory 13 of the electronic control unit 10 of the management server 3, the values calculated by the routine for calculation of primary information shown in FIG. 10, and the values calculated by the routine for calculation of secondary information shown in FIG. 11. Next, at step 91, the natural energy utilization information shown in FIG. 5 is processed and a list of the processed natural energy utilization information is prepared. One example of this processed natural energy utilization information is shown in FIG. 13.

That is, as explained above, if power is generated by the solar power generation apparatus 23 in the region which one is interested in, it is believed that the interest of persons interested in this region with respect to generation of power by the solar power generation apparatuses 23 would rise. In the example shown in FIG. 13, envisioning such a case, the natural energy utilization information is listed divided into each running region of the vehicle 5, for example, each of Tokyo city (H₁), Shizuoka prefecture (H₂), and Aichi prefecture (H₃). In this case, in the example shown in FIG. 13, vehicles 5 which are running or ran in the same running region, for example, vehicles 5 which are running or ran in Tokyo city (H₁), are respectively assigned nos. in order from No. 1 on. The vehicles 5 are posted with the amounts generation, amounts of charging, amounts of consumption, and amounts of reduction of CO₂ emission for the primary information and are posted with the names of the owners and running times as secondary information.

Again returning to FIG. 12, at step 92, one or both of a list of natural energy utilization information such as shown in FIG. 5 and a list of natural energy utilization information such as shown in FIG. 13 are posted to the site for posting a list of natural energy utilization information in the management server 3. A party desiring acquisition which desires acquisition of natural energy utilization information can access the site for posting a list of natural energy utilization information in the management server 3 to thereby acquire natural energy utilization information.

In this way, in the embodiment according to the present invention, primary information relating to generation or use of electrical energy generated by the solar power generation apparatus 23 mounted in the vehicle 5 and secondary information relating to the vehicle 5 mounting the solar power generation apparatus 23 are acquired and natural energy utilization information tying this secondary information to this primary information is prepared. Further, in the embodiment according to the present invention, there is provided an energy utilization information processing method for acquiring primary information relating to generation or use of electrical energy generated by the solar power generation apparatus 23 mounted in the vehicle 5 and secondary information relating to the vehicle 5 mounting the solar power generation apparatus 23 and preparing natural energy utilization information tying this secondary information with this primary information. Further, in the embodiment according to the present invention, there is provided a program that causes a computer to acquire primary information relating to generation or use of electrical energy generated by the solar power generation apparatus 23 mounted in the vehicle 5 and secondary information relating to the vehicle 5 mounting the solar power generation apparatus 23 and prepare natural energy utilization information tying this secondary information with this primary information.

Further, in the embodiment according to the present invention, each primary information includes information relating to the amount of generation of electrical energy generated by the solar power generation apparatus 23. Furthermore, in the embodiment according to the present invention, the primary information includes not only the information relating to the amount of generation of electrical energy but also at least one of information relating to the amount of charging of the battery 22 mounted in the vehicle 5 and information relating to the amount of consumption of electrical energy used for driving the vehicle 5.

Further, in the embodiment according to the present invention, each secondary information includes information relating to the running position of the vehicle 5. Furthermore, in the embodiment according to the present invention, the secondary information includes not only information relating to the running position of the vehicle 5 but also information of at least one of the owner of vehicle 5, the passengers of vehicles 5, the running region of the vehicles 5, and the running time of the vehicle 5. Further, in the embodiment according to the present invention, each primary information includes information relating to the amount of generation of electrical energy generated by the solar power generation apparatus 23 while each secondary information includes information relating to the running position of the vehicle 5. The natural energy utilization information includes information showing the relationship of the amount of generation of electrical energy and the running position of the vehicle 5.

The natural energy utilization information tying this secondary information with primary information not only has the effect of raising the interest of people relating to the utilization of natural energy but also plays a large role in obtaining a grasp of the state of utilization of natural energy. Further, the information relating to the amount of charging of the battery 22 plays a particularly large role in the case of making the charging power of the battery 22 an object for a power trade, while the information relating to the amount of reduction of CO₂ emission plays a particularly large role in trading carbon credits. Therefore, the present invention can be said to contribute to decarbonization, carbon neutrality, and sustainable development goals (SDGs) by the promotion of utilization of natural energy such as sunlight.

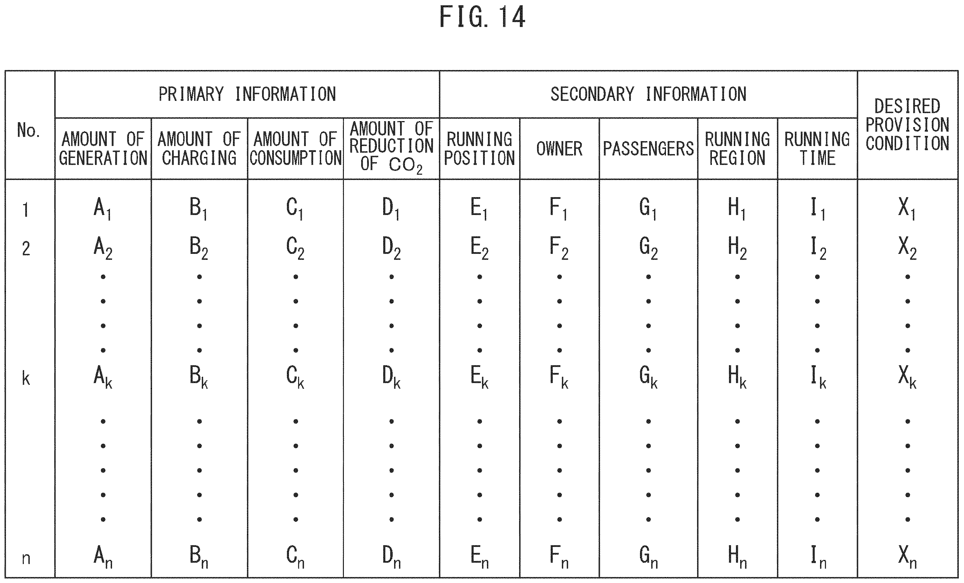

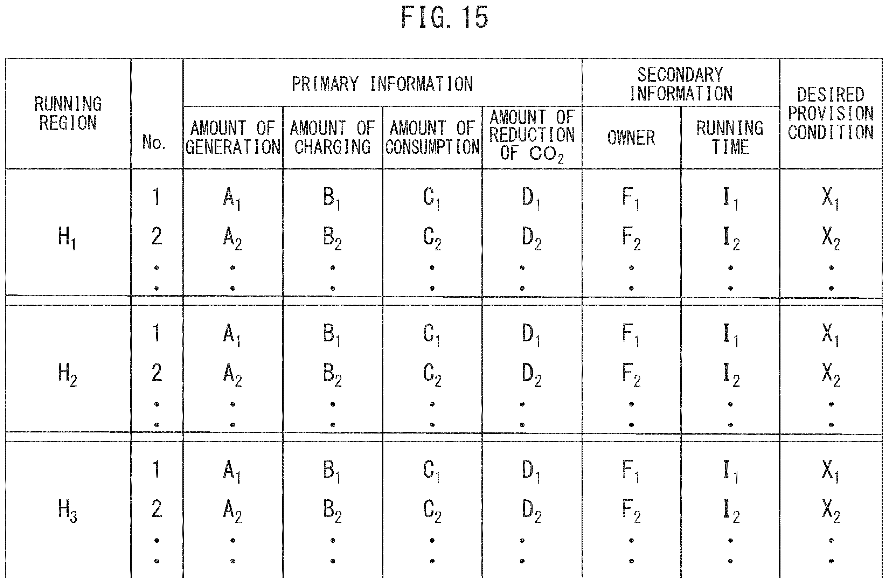

Next, an embodiment for matching up a party desiring provision of prepared natural energy utilization information with a party desiring acquisition of natural energy utilization information will be explained with reference to FIG. 14 to FIG. 22B. If trying to match up a party desiring provision and a party desiring acquisition, a list of natural energy utilization information shown in FIG. 14 comprised of the list of the natural energy utilization information shown in FIG. 5 to which desired provision conditions are added is used, while a list of natural energy utilization information shown in FIG. 15 comprised of the list of the natural energy utilization information shown in FIG. 13 to which desired provision conditions are added is used.

In the list of natural energy utilization information shown in FIG. 14 and the list of natural energy utilization information shown in FIG. 15, in the desired provision conditions, a monetary request or a request for points etc. for reward for provision of natural energy utilization information is posted. Note that, in this case, sometimes no reward at all is requested.

In this regard, if trying to match up a party desiring provision and a party desiring acquisition, in the embodiment according to the present invention, the desired acquired natural energy utilization information is posted from the party desiring acquisition, and the party desiring provision and the party desiring acquisition are matched up based on the posted desired acquired natural energy utilization information and the natural energy utilization information provided by the party desiring provision. In this case, in the embodiment according to the present invention, the party desiring acquisition of natural energy utilization information accesses a site for registration of desired acquired natural energy utilization information in the management server 3, and the party desiring acquisition registers the desired acquired natural energy utilization information.

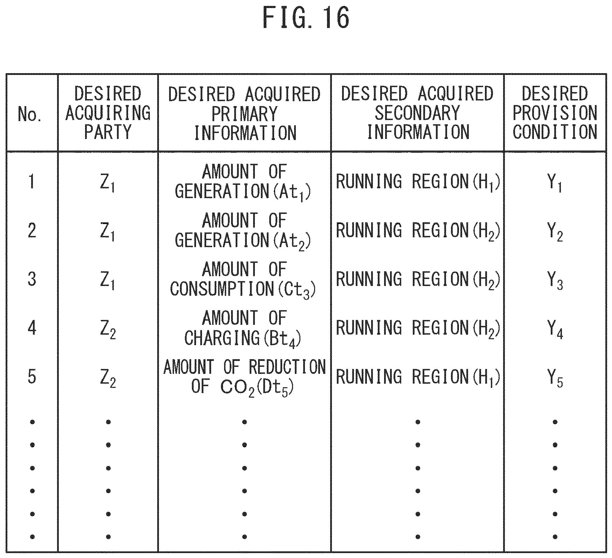

FIG. 16 shows an example of a list of desired acquired natural energy utilization information prepared in the management server 3 based on the desired acquired natural energy utilization information registered by the party desiring acquisition. As shown in FIG. 16, the list of the desired acquired natural energy utilization information lists the parties desiring acquisition, desired acquired primary information, desired acquired secondary information, and desired acquisition conditions. Note that, the At₁, At₂, Ct₃, Bt₄, and Dt₅ in parentheses described in the column of desired acquired primary information show the desired acquired amounts, while the H₁, H₂ in parentheses described in the column of desired acquired secondary information show for example Tokyo city and Shizuoka prefecture. Further, as the desired acquisition conditions, monetary payment or payment by points etc. for acquisition of natural energy utilization information is posted. Note that, in this case, sometimes no payment is required.

Note that, FIG. 16 shows as examples the case where a party desiring acquisition Z₁ desires acquisition of natural energy utilization information with the running region of Tokyo city (H₁) and the amount of generation of At₁(kwh), natural energy utilization information with the running region of Shizuoka prefecture (H₂) and the amount of generation of At₂(kWh), and natural energy utilization information with the running region of Shizuoka prefecture (H₂) and the amount of consumption of electrical energy of Ct₃(kWh) and the case where a party desiring acquisition Z₂ desires acquisition of natural energy utilization information with the running region of Shizuoka prefecture (H₂) and the amount of charging Q of the battery 22 of Dt₅(Wh) and natural energy utilization information with the running region of Tokyo city (H₁) and the amount of reduction of CO₂ emission of Dt₅(kg).

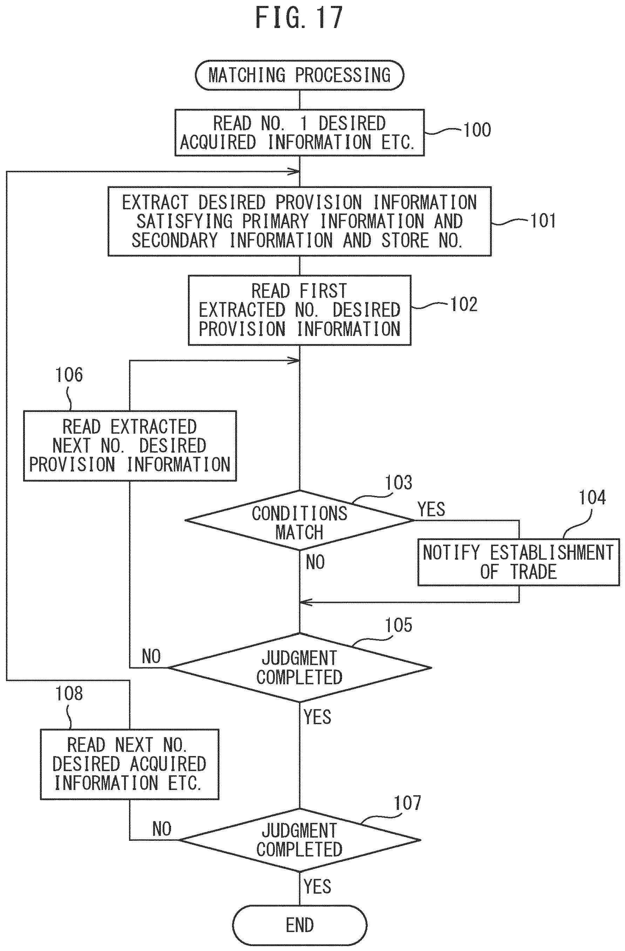

FIG. 17 shows a routine for matching processing for matching up a party desiring provision and a party desiring acquisition. This routine is repeatedly executed in the electronic control unit 10 of the management server 3 every certain time, for example, every 10 minutes, every 1 hour, or every 24 hours. Note that, below, this routine for matching processing will be explained taking as an example the case of matching a party desiring provision and a party desiring acquisition based on the list of natural energy utilization information shown in FIG. 15 and the list of desired natural energy utilization information shown in FIG. 16.

Referring to FIG. 17, first, at step 100, the No. 1 desired acquired natural energy utilization information in the list of desired acquired natural energy utilization information shown in FIG. 16 is read. Next, at step 101, information satisfying the primary information and secondary information in the read No. 1 desired acquired natural energy utilization information is extracted from the list of natural energy utilization information able to be provided shown in FIG. 15, and the no. of the extracted natural energy utilization information able to be provided is stored. Next, at step 102, the first extracted no. natural energy utilization information able to be provided in the extracted natural energy utilization information able to be provided is read.

Next, at step 103, it is judged if the desired provision condition of the first extracted no. natural energy utilization information able to be provided and the desired acquisition condition of the No. 1 desired acquired natural energy utilization information match up. When it is judged that the desired provision condition and desired acquisition condition match, the routine proceeds to step 104 where both or at least one of the party desiring acquisition and the party desiring provision is contacted to inform it that the trade stands. On the other hand, when it is judged that the desired provision condition and desired acquisition condition do not match, the routine proceeds to step 105 where it is judged whether judgment of whether the desired provision condition and desired acquisition condition match has been completed for all no. natural energy utilization information able to be provided.

When it is judged that judgment of whether the conditions match for the desired provision condition and desired acquisition condition has not been completed for all extracted no. natural energy utilization information able to be provided, the routine proceeds to step 106 where the next extracted no. natural energy utilization information able to be provided is read. Next, the routine proceeds to step 103 where it is judged whether the desired provision condition of the next extracted no. natural energy utilization information able to be provided and the desired acquisition condition of the No. 1 desired acquired natural energy utilization information match. When it is judged at step 105 that the judgment of the match of the conditions of the desired provision condition and the desired acquisition condition has been completed for all extracted no. natural energy utilization information able to be provided, the routine proceeds to step 107.

At step 107, it is judged whether such judgment of the match of the conditions has been completed for all extracted no. desired acquired natural energy utilization information listed in the list of the desired acquired natural energy utilization information shown in FIG. 16. When it is judged that such judgment of the match of the conditions has not been completed for all no. desired acquired natural energy utilization information, the routine proceeds to step 108 where the next extracted no. desired acquired natural energy utilization information in the list of desired acquired natural energy utilization information shown in FIG. 16 is read. Next, the routine proceeds to step 101. In this way, it is judged whether the desired provision condition and the desired acquisition condition match for all desired acquired natural energy utilization information in the list of desired acquired natural energy utilization information shown in FIG. 16.

Note that, in the example shown in FIG. 17, only the case where the desired provision condition and the desired acquisition condition match is explained, but of course if the desired provision condition and the desired acquisition condition do not match, a matching system enabling a party desiring acquisition and a party desiring provision to negotiate can be constructed.

In this way, in the embodiment according to the present invention, a matching processing unit for matching up a party desiring provision of prepared natural energy utilization information with a party desiring acquisition of natural energy utilization information is provided. In this case, in the embodiment according to the present invention, the electronic control unit 10 of the management server 3 constructs this matching processing unit.

Further, in the embodiment according to the present invention, the desired acquired natural energy utilization information which the party desiring acquisition desires to acquire is posted. This matching processing unit judges whether information satisfying the desired acquired natural energy utilization information of the party desiring acquisition is included in the natural energy utilization information provided by the party desiring provision. If information satisfying the desired acquired natural energy utilization information of the party desiring acquisition is included in the natural energy utilization information provided by the party desiring provision, the party desiring acquisition and the party desiring provision are matched up. In this case, when the party desiring acquisition and the party desiring provision are matched up, this matching processing unit contacts at least one of the party desiring acquisition and the party desiring provision to inform it that the trade stands.

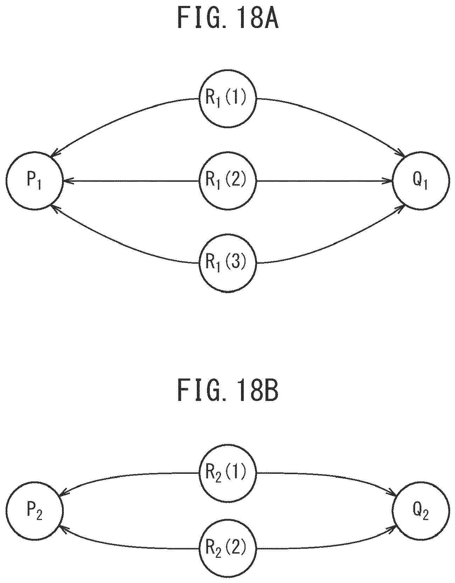

Next, an embodiment designed so that the party desiring acquisition posts a running route of a vehicle so that the party desiring acquisition can acquire natural energy utilization information which it desires to acquire will be explained. First, a summary of this embodiment will be explained while referring to FIG. 18A and FIG. 18B schematically showing examples of running routes of a vehicle. Note that, FIG. 18A shows the case where three different running routes may be considered between regions P1 and Q1 separated from each other, for example, between Nagoya city and Kyoto city. R₁(1), R₁(2), and R₁(3) show the regions passed through on the running routes. On the other hand, FIG. 18B shows the case where two different running routes may be considered between regions P2 and Q2 separated from each other. R₂(1) and R₂(2) show the regions passed through on the running routes.

In this case, in the example shown in FIG. 18A, one running route is selected from among the running route passing through the region R₁(1), the running route passing through the region R₁(2), and the running route passing through the region R₁(3), then the selected running route is posted by the party desiring acquisition. On the other hand, in the example shown in FIG. 18B, either running route of the running route passing through the region R₂(1) and the running route passing through the region R₂(2) is selected, then the selected running route is posted by the party desiring acquisition. Which running route is selected depends on the objective which the party desiring acquisition is interested in. For example, if the party desiring acquisition is interested in the running region, it may be considered to select a running route passing through the running region interested in. If interested in the magnitude of the amount of generation, for example, it may be considered to select a running route predicted to have a great amount of sunlight based on weather reports.

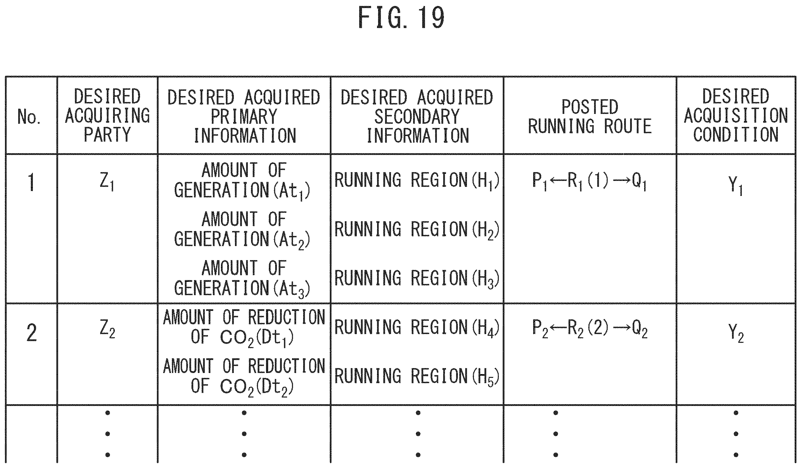

FIG. 19 shows one example of a list of desired acquired natural energy utilization information prepared in the management server 3 based on the desired acquired natural energy utilization information registered by parties desiring acquisition. As shown in FIG. 19, the list of the desired acquired natural energy utilization information lists the parties desiring acquisition, desired acquired primary information, desired acquired secondary information, posted running routes posted by the parties desiring acquisition, and desired acquisition conditions. Note that, the At₁, At₂, Ct₃, Dt₁, and Dt₂ in parentheses described in the column of the desired acquired primary information express the desired acquired amounts while the H₁, H₂ in parentheses described in the column of desired acquired secondary information for example express Tokyo city and Shizuoka prefecture. The posted running routes show the running routes selected by the parties desiring acquisition explained with reference to FIG. 18A and FIG. 18B. Further, the desired acquisition conditions show monetary payment or payment by points etc. for acquisition of natural energy utilization information. Note that, in this case, sometimes no payment is required.

FIG. 20 shows one example of a procedure for performing matching processing of a party desiring provision and a party desiring acquisition. If referring to FIG. 20, in this example, first, at C1 of FIG. 20, the party desiring acquisition accesses a list preparation site of natural energy utilization information in the management server 3 by communication equipment 40 installed in the company desiring acquisition 4 (FIG. 4) and registers the party desiring acquisition, desired acquired primary information, desired acquired secondary information, the posted running route posted by the party desiring acquisition, and desired acquisition condition at the list preparation site of the management server 3. If these data finish being registered, at C2 of FIG. 20, in the management server 3, these data are posted to the list of desired acquired natural energy utilization information such as shown in FIG. 19.

If these data are posted in the list of the desired acquired natural energy utilization information, at C3 of FIG. 20, a party desiring provision able to run on a posted running route posted by the party desiring acquisition sends the management server 3 a declaration to the effect that it can run on the posted running route together with the desired acquisition condition, that is, an offer of provision, on the display screen of the display unit 34 of the vehicle 5 or the mobile terminal 6 owned by the owner of the vehicle 5. If the management server 3 receives an offer of provision, at C4 of FIG. 20, at the management server 3, a routine for matching processing such as shown in FIG. 17 is used for matching processing between the party desiring provision and the party desiring acquisition.

FIG. 21 shows another example of the procedure for performing matching processing of a party desiring provision and a party desiring acquisition. If referring to FIG. 21, in this example, first, at D1 of FIG. 21, the party desiring acquisition accesses a list preparation site of natural energy utilization information in the management server 3 by the communication equipment 40 (FIG. 4) installed in the company desiring acquisition 4 and registers the party desiring acquisition, desired acquired primary information, desired acquired secondary information, posted running route posted by the party desiring acquisition, and desired acquisition condition in the list preparation site of the management server 3. If these data finish being registered, at D2 of FIG. 21, these data are sent from the management server 3 to the vehicle 5 or the mobile terminal 6 owned by the owner of the vehicle 5 and these data are displayed on the display screen of the display unit 34 of the vehicle 5 or on the mobile terminal 6.

If the data is displayed on the display screen of the display unit 34 of the vehicle 5 or the mobile terminal 6 which the owner of the vehicle 5 owns, at D3 of FIG. 21, the party desiring provision able to run on the posted running route posted by the party desiring acquisition sends a declaration to the effect that it can run on the posted running route together with the desired acquisition condition, that is, an offer of provision, from the display unit 34 of the vehicle 5 or from the mobile terminal 6 owned by the owner of the vehicle 5. If the management server 3 receives the offer of provision, at D4 of FIG. 21, at the management server 3, a routine for matching processing such as shown in FIG. 17 is used for matching processing between the party desiring provision and the party desiring acquisition.

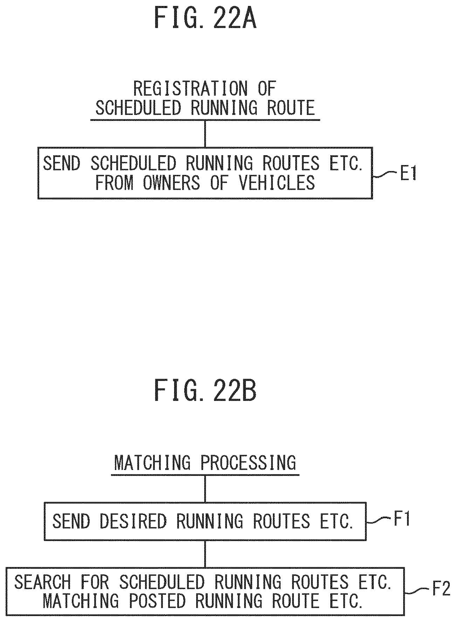

FIG. 22A and FIG. 22B show still another example of the procedure for performing matching processing of a party desiring provision and a party desiring acquisition. This example shows the case where scheduled running routes of the parties desiring provision are registered in advance at a list preparation site of natural energy utilization information in the management server 3. First, if referring to FIG. 22A, in this example, at E1 of FIG. 22A, information relating to the scheduled running routes etc. is sent from owners of vehicles 5 to the management server 3. At this time, in the management server 3, the owners of the vehicles 5, scheduled running routes, etc. are registered at the list preparation site of natural energy utilization information.

On the other hand, if referring to FIG. 22B showing the procedure of matching processing of a party desiring provision and a party desiring acquisition, at F1 of FIG. 22B, the party desiring acquisition accesses the list preparation site of natural energy utilization information in the management server 3 by the communication equipment 40 (FIG. 4) installed in the company desiring acquisition 4 and registers the party desiring acquisition, desired acquired primary information, desired acquired secondary information, posted running route posted by the party desiring acquisition, and desired acquisition condition in the list preparation site of the management server 3. If these data finish being registered, at F2 of FIG. 22B, at the management server 3, the matching processing procedure such as shown in FIG. 17 is used to search for a scheduled running route etc. matching with the posted running route registered by the party desiring acquisition from among the scheduled running routes etc. registered by the owners of the vehicles 5, and matching processing of a party desiring provision and a party desiring acquisition is performed.

In the embodiment shown from FIG. 18A to FIG. 22B as well, a matching processing unit matching up a party desiring provision of prepared natural energy utilization information and a party desiring acquisition of natural energy utilization information is provided. In this case, in this embodiment as well, the electronic control unit 10 of the management server 3 forms this matching processing unit. Further, in this embodiment, a running route of a vehicle able to acquire desired acquired natural energy utilization information which the party desiring acquisition desires to acquire is posted by the party desiring acquisition. The matching processing unit matches the owner of a vehicle which might run along the running route posted by the party desiring acquisition and the party desiring acquisition.

Further, in this embodiment, the matching processing unit displays the running route posted by the party desiring acquisition on the display screens of vehicles or the mobile terminals of owners of vehicles and matches the owner of a vehicle which might run along the running route posted by the party desiring acquisition and the party desiring acquisition. Furthermore, in this embodiment, the matching processing unit matches an owner of a vehicle scheduled to run along the running route posted by the party desiring acquisition and the party desiring acquisition.

## Claims

1. An energy utilization information system comprising an electric control unit which is configured to
acquire primary information relating to generation or use of electrical energy generated by a solar power generation apparatus mounted in a vehicle and secondary information relating to the vehicle mounting the solar power generation apparatus, and
prepare natural energy utilization information tying the secondary information with the primary information.

2. An energy utilization information system according to claim 1, wherein the primary information includes information relating to an amount of generation of electrical energy generated by the solar power generation apparatus.

3. An energy utilization information system according to claim 2, wherein the primary information includes not only information relating to the amount of generation of electrical energy, but also at least one of information relating to an amount of charging of a battery mounted in the vehicle and information relating to an amount of consumption of the electrical energy used for driving the vehicle.

4. An energy utilization information system according to claim 1, wherein the secondary information includes information relating to a running position of the vehicle.

5. An energy utilization information system according to claim 4, wherein the secondary information includes not only information relating to the running position of the vehicle, but also at least one of information relating to an owner of the vehicle, passengers of the vehicle, a running region of the vehicle, and a running time of the vehicle.

6. An energy utilization information system according to claim 1, wherein the primary information includes information relating to an amount of generation of electrical energy generated by the solar power generation apparatus, the secondary information includes information relating to a running position of the vehicle, and the natural energy utilization information includes information showing a relationship of the amount of generation of electrical energy and the running position of the vehicle.

7. An energy utilization information system according to claim 1, comprising a matching processing unit matching up a party desiring provision of a prepared natural energy utilization information and a party desiring acquisition of the natural energy utilization information.

8. An energy utilization information system according to claim 7, wherein a desired acquired natural energy utilization information which the party desiring acquisition desires to acquire is posted, the matching processing unit judges whether information satisfying the desired acquired natural energy utilization information of the party desiring acquisition is included in the natural energy utilization information provided by the party desiring provision and, if judging that information satisfying the desired acquired natural energy utilization information of the party desiring acquisition is included in the natural energy utilization information provided by the party desiring provision, matches up the party desiring acquisition and the party desiring provision.

9. An energy utilization information system according to claim 8, wherein the matching processing unit contacts at least one of the party desiring acquisition and the party desiring provision to inform it that a trade stands when matching up the party desiring acquisition and the party desiring provision,.

10. An energy utilization information system according to claim 7, wherein a running route of the vehicle able to acquire the desired acquired natural energy utilization information of the party desiring acquisition is posted by the party desiring acquisition, and the matching processing unit matches up the party desiring acquisition and an owner of the vehicle which might run along the running route posted by the party desiring acquisition.

11. An energy utilization information system according to claim 10, wherein the matching processing part displays the running route posted by the party desiring acquisition on display screens of the vehicles or mobile terminals of owners of the vehicles and matches up the party desiring acquisition and an owner of the vehicle which might run along the running route posted by the party desiring acquisition.

12. An energy utilization information system according to claim 10, wherein the matching processing matches up the party desiring acquisition and an owner of the vehicle scheduled to run along the running route posted by the party desiring acquisition.

13. An energy utilization information system according to claim 1, wherein the primary information includes information relating to an amount of reduction of CO₂ emission covered by a trade by carbon credits, and the party desiring acquisition of the natural energy utilization information can purchase the carbon credits.

14. An energy utilization information processing method comprising the steps of
acquiring primary information relating to generation or use of electrical energy generated by a solar power generation apparatus mounted in a vehicle and secondary information relating to the vehicle mounting the solar power generation apparatus, and
preparing natural energy utilization information tying the secondary information with the primary information.

15. A program that causes a computer to
acquire primary information relating to generation or use of electrical energy generated by a solar power generation apparatus mounted in a vehicle and secondary information relating to the vehicle mounting the solar power generation apparatus, and
prepare natural energy utilization information tying the secondary information with the primary information.
